# EUROPÄISCHE PATENTSCHRIFT

(11) **EP 4 388 046 B1**
(45) Veröffentlichungstag und Bekanntmachung des Hinweises auf die Patenterteilung: **31.12.2025**
(21) Anmeldenummer: 22764735.1
(22) Anmeldetag: 11.08.2022
(51) Int. Cl.: C08L 11/00, C08K 7/10

(54) **NASSVERKLEBUNG VON LAGERSTABILEN SPRÜHKLEBSTOFFEN AUF BASIS POLYCHLOROPREN**
WET BONDING OF STORAGE STABLE SPRAY ADHESIVES BASED ON POLYCHLOROPRENE
COLLAGE HUMIDE DES ADHÉSIFS À VAPORISER STABLES AU STOCKAGE À BASE DE POLYCHLOROPRÈNE

(30) Priorität: 16.08.2021 EP 21191434
(43) Veröffentlichungstag der Anmeldung: 26.06.2024
(73) Patentinhaber: Covestro Deutschland AG, 51373 Leverkusen (DE)
(72) Erfinder: KUEKER, Peter, 51377 Leverkusen (DE); KEMPKES, Juergen, 51069 Köln (DE); WIPPERFUERTH, Udo, 51061 Köln (DE); THIEBES, Christoph, 51061 Köln (DE); MUSCH, Ruediger, 51467 Bergisch Gladbach (DE)
(74) Vertreter: Levpat
(86) Internationale Anmeldenummer: PCT/EP2022/072604
(87) Internationale Veröffentlichungsnummer: WO 2023/020946

(56) Entgegenhaltungen:
- DE-A1- 102004 008 055
- DE-A1- 102006 045 384
- DE-A1- 102008 009 390

## Beschreibung

Die vorliegende Erfindung betrifft eine wässrige Dispersion mindestens enthaltend mindestens ein Polychloropren, mindestens eine Komponente ausgewählt aus der Gruppe bestehend aus Frischsol, einem modifizierten Kieselsol und Mischungen davon, mindestens ein Acrylsäure oder einen Acrylsäureester enthaltendes Copolymer, und gegebenenfalls weitere Additive, wobei die wässrige Dispersion einen pH-Wert von 9,7 bis 10,8 aufweist, ein Verfahren zur Herstellung der wässrigen Dispersion, eine Klebstoffzusammensetzung, mindestens enthaltend die wässrige Dispersion, die Verwendung der Dispersion zur Herstellung von Klebstoffzusammensetzungen, die Verwendung der Dispersion für die Verklebung von Schaumsubstraten nach dem Sprühkoagulationsverfahren, einen Klebstoffverbund, enthaltend mindestens ein mit der wässrigen Dispersion verklebtes Substrat und/oder Flächengebilde, und ein Verfahren zur Herstellung eines Verbundmaterials, wobei mindestens zwei Fügeteile des Verbundmaterials mit der wässrige Dispersionen verklebt werden.

Versprühbare Kontaktkleber auf der Basis von Polychloropren-Dispersionen sind dem Fachmann an sich bekannt und werden in verschiedenen Bereichen eingesetzt, besonders zur Schaumverklebung im Matratzen- und Möbelsektor. Insbesondere die folgenden beiden Verfahren sind bekannt:
Beim 2K(omponenten)-Verfahren werden mit einer Spritzpistole, die zwei Düsen besitzt, gleichzeitig Klebstoff-Formulierung und wässriges Koagulationsmittel verdüst. Im Sprühstrahl treffen beide Mischungen auf einander und koagulieren dort und/oder auf der Substratoberfläche, siehe dazu Katsuyuki Hara, Institute of Technology, Osaka Japan, "Two part spray mixing water borne adhesive" World adhesive congress, Munich, June, 8 to 10, 1988. Dieses Verfahren ist jedoch störanfällig und aufwendig, da beide Komponenten konstant in einem bestimmten Mischungsverhalten verdüst werden müssen.

Beim 1K(omponenten)-Verfahren wird eine Klebstoff-Formulierung mit einer begrenzten Scherstabilität durch eine Spritzpistole mit einer Düse versprüht. Dabei ist zu beachten, dass die Formulierung lagerstabil ist und sich die Viskosität während der Lagerung nicht ändert. Wässrige 1K-Formulierungen können zur Erzeugung einer Nassklebrigkeit der Klebstoff-Dispersion organische Lösemittel enthalten, siehe beispielsweise EP 0 814 139 A1 oder DE 3 028 693 A1. Aufgrund von ökologischen, ökonomischen, Arbeitssicherheits- und Hygiene-Gründen besteht jedoch ein wachsender Bedarf an lösemittelfreien Klebstoff-Formulierungen.

Voraussetzung für die Verwendung von versprühbaren Polychloropren-Dispersionen als 1K-Klebstoffe ist die Absenkung des pH-Wertes auf kleiner 9,5, wobei die Wirkung zur Nassverklebung mit sinkendem pH-Wert zunimmt, aber gleichzeitig auch die Instabilität der Formulierungen besonders bei Lagerung und Transport.

In den Schriften EP 0 624 634 A1 und EP 0 470 928 A1 werden lösemittelfreie, wässrige 1K-Formulierungen zum elastischen Verkleben von Substratflächen beschrieben, die bei Verklebungen höhere Anfangsfestigkeiten besitzen, da sie eine Mischung aus Acrylsäureester-Copolymeren und Polychloropren enthalten. Eine zusätzliche Destabilisierung der wässrigen Polymerdispersion ist durch eine Erniedrigung des pH-Werts möglich. Der pH-Wert wird so eingestellt, dass der Latex direkt nach Auftragung auf das Substrat einen Film bildet und verklebt werden kann. Dies geschieht beispielsweise durch Zugabe von schwachen Säuren, beispielsweise Borsäure, Hydrogencarbonat, Essigsäure, Glycin, anderen Aminosäuren, Weinsäure, Zitronensäure, oder deren Alkali- und Erdalkalisalzen. Bei diesen metastabilen Dispersionen ist die geringe Lagerfähigkeit, insbesondere die Neigung zu Koagulation beim Transport oder bei Temperaturschwankungen, nachteilig.

Eine weitere Möglichkeit, 1K-Sprühklebstoffe auf Basis von Polychloropren herzustellen, wird in der Schrift DE 10 2009 020497 A1 beschrieben. Den entsprechenden Formulierungen werden Phthalate zugesetzt. Viele dieser Phthalate sind gesundheitlich bedenklich und als zulassungspflichtige Stoffe gelistet, beispielsweise die Verbindung mit der CAS-Nummer 84-69-5.

In US 2003/221778 wird der Einsatz von Kieselsol in Polychloropren-Dispersionen beschrieben mit dem Ziel in den hochviskosen Formulierungen die Endfestigkeiten der Verklebungen zu erhöhen. Dies gelingt jedoch nur durch Zusatz von Zinkoxid. Gerade Zinkoxid ist aber toxikologisch bedenklich.

Aufgabe der vorliegenden Erfindung ist es daher eine auf Polychloropren basierende wässrige Dispersion bzw. 1K-Klebstoffformulierung bereitzustellen, die in einem 1K-Verfahren eingesetzt werden kann und vorteilehafte Eigenschaften, insbesondere eine hohe Anfangsfestigkeit, d.h. Nassfestigkeit, der Klebeverbindung, eine gute Lagerfähigkeit der Klebstoffformulierung und insgesamt eine hohe Klebleistung aufweist. Des Weiteren sollen die bereitgestellten 1K-Klebstoff-Formulierungen trotz des Verzichts auf potentiell umweltgefährdende Säurefänger wie ZnO eine hervorragende pH-Wert-Stabilität und eine ausgezeichnete Alterungsstabilität aufweisen.

Diese Aufgaben werden erfindungsgemäß gelöst durch eine wässrige Dispersion mindestens enthaltend
a) mindestens ein Polychloropren,
b) mindestens eine Komponente ausgewählt aus der Gruppe bestehend aus Frischsol, einem modifizierten Kieselsol und Mischungen davon,
c) mindestens ein Acrylsäure oder einen Acrylsäureester enthaltendes Copolymer, und
d) gegebenenfalls weitere Additive,
wobei die wässrige Dispersion einen pH-Wert von 9,7 bis 10,8 aufweist.

Die wesentlichen und optionalen Komponenten der erfindungsgemäßen wässrigen Dispersion werden im Folgenden detailliert beschrieben.

Als Komponente a) enthält die erfindungsgemäße wässrige Dispersion mindestens eine Polychloropren.

Polychloropren ist dem Fachmann an sich bekannt. Die Herstellung des in der erfindungsgemäßen Dispersion vorhandenen Polychloroprens kann nach dem Fachmann an sich bekannten Verfahren erfolgen, beispielsweise durch eine Emulsionspolymerisation im alkalischen, wässrigen Medium, beispielsweise beschrieben in "Ullmanns Encyclopädie der technischen Chemie", Band 9, S. 366, Verlag Urban und Schwarzenberg, München-Berlin 1957, "Encyclopedia of Polymer Science and Technology", Vol. 20 3, S. 705 bis 730, John Wiley, New York 1965 oder "Methoden der Organischen Chemie" (Houben-Weyl) XIV/l, Seiten 738 f. Georg Thieme Verlag Stuttgart 1961.

Erfindungsgemäß kann als Komponente a) der erfindungsgemäßen Dispersion mindestens ein Polychloropren-Homopolymer oder mindestens ein Polychloropren-Copolymer eingesetzt werden. Geeignete Polychlorporen-Copolymere werden beispielsweise erhalten durch Polymerisation von Chloropren und 0,1 bis 20 Gew.-% mindestens eines mit Chloropren copolymerisierbaren, ethylenisch ungesättigten Monomeres, bevorzugt in einem alkalischen Medium.

Geeignete copolymerisierbare Monomere werden beispielsweise beschrieben in "Methoden der Organischen Chemie" (Houben-Weyl) XIV/l. 738 f. Georg Thieme Verlag Stuttgart 1961. Bevorzugt sind Verbindungen mit 3 bis 12 C-Atomen und 1 oder 2 copolymerisierbaren C-C-Doppelbindungen pro Molekül. Beispiele bevorzugter copolymerisierbarer Monomere sind ausgewählt aus der Gruppe bestehend aus 2,3-Dichlorbutadien, 1-Chlorbutadien und Mischungen davon. Außerdem kann auch Schwefel als anorganisches copolymerisierbares Monomer in Dispersionsform eingesetzt werden.

In der erfindungsgemäßen wässrigen Dispersion liegt das mindestens eine Polychloropren bevorzugt in Partikeln mit einer mittleren Teilchengröße von 60 bis 220 nm, bestimmt durch das Verfahren gemäß der DIN ISO 13321 -2004, vor.

Das erfindungsgemäß vorliegende mindestens eine Polychloropren weist bevorzugt einen Gelgehalt (Toluol-unlöslicher Anteil) von 5 bis 30 Gew.-% auf.

Das erfindungsgemäß vorliegende mindestens eine Polychloropren weist weiter bevorzugt ein zahlenmittleres Molekulargewicht des Toluol-unlöslichen Anteils von 200.000 bis 500.00 g/mol auf.

Das erfindungsgemäß vorliegende mindestens eine Polychloropren weist weiter bevorzugt eine Molekulargewichtsverteilung (Mw/Mn) von 2,0 bis 4,0 auf.

Die oben genannten Eigenschaften des Polychloroprens, insbesondere Molekulargewicht und Molekulargewichtsverteilung, können durch dem Fachmann bekannte Verfahren bestimmt werden, beispielsweise Lösungsmittelgradienten-Chromatographie, Gelchromatographie und/oder Ultrazentrifugenversuche.

Das mindestens eine Polychloropren, welches erfindungsgemäß als Komponente a) eingesetzt wird, wird bevorzugt als wässrige Polychloropren-Dispersion eingesetzt. Geeignete wässrige Polychloropren-Dispersionen werden beispielsweise durch Emulsionspolymerisation bei 0 bis 70 °C, vorzugsweise 5 bis 45 °C, und einem pH-Wert von 10 bis 14, vorzugsweise 11 bis 13, hergestellt. Die Aktivierung, d.h. den radikalischen Start der Reaktion, erfolgt durch die üblichen Aktivatoren bzw. Aktivatorsysteme. Die Herstellung der erfindungsgemäß eingesetzten Polychloropren-Dispersion kann sowohl kontinuierlich als auch diskontinuierlich erfolgen, wobei die kontinuierliche Polymerisation bevorzugt ist.

Erfindungsgemäß besonders geeignete Polychloropren-Dispersionen werden durch Emulsionspolymerisation von Chloropren und ggf. eines mit Chloropren copolymerisierbaren ethylenisch ungesättigten Monomeren in alkalischem Medium hergestellt, wie beispielsweise offenbart in der WO-A 02/24825, DE-A 30 02 734, US-A 5,773, 544 oder WO 2009/027013 A. Besonders bevorzugt sind Polychloropren-Dispersionen, die durch kontinuierliche Polymerisation hergestellt werden, wie beispielsweise beschrieben in der WO 02/24825 A, insbesondere Beispiel 2, und DE 3 002 734, insbesondere Beispiel 6, wobei der Reglergehalt von 0,01 bis 0,3 Gew.-% variiert werden kann. Geeignete Regler sind dem Fachmann an sich bekannt, insbesondere Kettenübertragungsmittel, beispielsweise Mercaptane, beispielsweise beschrieben in DE 3 002 711 A und GB 1 048 235 A, oder Xanthogendisulfide,

In der erfindungsgemäß bevorzugt eingesetzten wässrigen Dispersion liegt das mindestens eine Polychloropren bevorzugt in Partikeln mit einer mittleren Teilchengröße von 60 bis 220 nm vor, jeweils bestimmt durch das Verfahren gemäß der DIN ISO 13321 - 2004. Des Weiteren weist die erfindungsgemäß bevorzugt eingesetzte wässrige Dispersion bevorzugt einen Restmonomer- Gehalt von weniger als 50 ppm auf, bestimmt durch dem fachmann bekannte Verfahren, insbesondere quantitative Bestimmung von Chloropren aus Polychloropren-Latex mittels Headspace-GC und Standard-Additions-Verfahren (Bedingungen Headspace-Ofen 70 C, Säule Restek/Stabilwax-MS (L: 30m, ID: 0,25mm, FD: 0,25µm), Säulenofen: 70->180 C 10K/min, FID Detektor).

Zur Einstellung des Molekulargewichtes bzw. Molekulargewichtsverteilung der erfindungsgemäß eingesetzten Polychloroprens können dem Fachmann an sich bekannte Kettenübertragungsmittel, beispielsweise Mercaptane, beispielsweise beschrieben in DE 3 002 711 A und GB 1 048 235 A, oder Xanthogendisulfide, beispielsweise beschrieben in DE 1186215 A und DE 2156453 A, verwendet werden.

Die Polymerisation zur Herstellung des Polychloroprens wird im Allgemeinen bei einem Monomerumsatz von 50 bis 95%, bevorzugt 60 bis 80%, abgebrochen, wobei als Inhibitor beispielsweise Phenothiazin, tert-Butylbrenzcatechin und/oder Diethylhydroxylamin eingesetzt werden kann. Nach erfolgter Polymerisation wird das restliche Chloropren-Monomer bevorzugt bis auf eine Restkonzentration von weniger als 50 ppm, beispielsweise durch eine Wasserdampfdestillation und/oder Kolonnenentgasung, entfernt. Das Entfernen erfolgt beispielsweise wie in W. Obrecht in Houben-Weyl: Methoden der organischen Chemie Bd. 20 Teil 3 Makromolekulare Stoffe, (1987) S. 852 ff. beschrieben.

Die Lagerung, insbesondere direkt nach der Herstellung des Zwischenproduktes, d.h. des Dünnlatexes, unmittelbar nach der Entgasung, d.h. nach der Trennung vom Restmonomeren, des Polychloroprens erfolgt bevorzugt bei einer Temperatur von 50 bis 110°C, bevorzugt 60 bis 100 °C, besonders bevorzugt 70 bis 90 °C, wobei der in organischen Lösemitteln unlösliche Anteil (Gelanteil) um mindestens 10 Gew.-% auf 1 bis 60 Gew.-%, bevorzugt auf 5 bis 30 Gew.-%, besonders bevorzugt auf 10 bis 20 Gew.-%, ansteigt.

Nach Herstellung der wässrigen Polychloropren-Dispersion kann ihr Feststoffgehalt gegebenenfalls durch einen, dem Fachmann an sich bekannten, Aufrahmprozess erhöht werden. Diese Aufrahmung erfolgt z.B. durch Zusatz von Alginaten, wie in "Neoprene Latices, John C. Carl, E.I. Du Pont 1964, S.13" beschrieben.

Erfindungsgemäß bevorzugt wird das mindestens eine Polychloropren als wässrige Dispersion mit einem Feststoffgehalt von 29 bis 58 Gew.-%, bevorzugt 50 bis 58 Gew.-%, besonders bevorzugt 55 bis 57 Gew.-%, jeweils bestimmt nach DIN EN ISO 3251 - 2019-09 - (Bestimmung des Gehaltes an nichtflüchtigen Anteilen) eingesetzt. Entsprechende Polychloropren-Dispersionen sind kommerziell beispielsweise unter dem Handelsnamen Dispercoll^{®} C von der Covestro Deutschland AG erhältlich.

Als Komponente b) enthält die erfindungsgemäße Dispersion mindestens eine Komponente ausgewählt aus der Gruppe bestehend aus Frischsol, einem modifizierten Kieselsol und Mischungen davon.

Im Rahmen der vorliegenden Erfindung wird unter dem Begriff "Frischsol" eine verdünnte Kieselsäurelsöung Si(OH)₄ verstanden. Diese ist im freien Zustand im Allgemeinen nicht stabil und wird daher bevorzugt in situ aus verschiedenen Vorstufen hergestellt, beispielsweise wie in US 2,244,325 und US 3,468,813 beschrieben.

Im technischen Maßstab werden als Ausgangsmaterial für Frischsol beispielsweise technische Wassergläser eingesetzt wie Natronwassergläser oder Kaliwassergläser.

Zur Herstellung des erfindungsgemäß eingesetzten Frischsols ist bevorzugt eine alkalifreie SiO₂-Lösung notwendig, die beispielsweise durch Entfernung der Alkalikationen aus Wasserglas erzeugt werden kann, beispielsweise durch Behandlung einer verdünnten Wasserglaslösung mit Kationenaustauscher-harzen in der H⁺-Fonn. Geeignete Kationenaustauscherharze hierfür sind beispielsweise Lewatit^{®}-Typen der Fa. Lanxess AG. Vorzugsweise werden dazu Wasserglaslösungen mit einem SiO₂-Gehalt unter 10 Gew.-% verwendet. Das so erhaltene Frischsol hat eine Feststoffkonzentration von bevorzugt 2 bis 8 Gew.-%, besonders bevorzugt 3,5 bis 6,5 Gew.-%.

Die vorliegende Erfindung betrifft daher bevorzugt die erfindungsgemäße wässrige Dispersion, wobei das Frischsol als wässrige Kieselsäurelösung mit einem Feststoffgehalt von 1 bis 10 Gew.-%, bevorzugt 2 bis 8 Gew.-%, besonders bevorzugt 3,5 bis 6,5 Gew.-%, eingesetzt wird.

Die vorliegende Erfindung betrifft des Weiteren auch die erfindungsgemäße Dispersion, wobei der pH-Wert des eingesetzten Frischsols 1,0 bis 3,5, bevorzugt 1,5 bis 3,0, besonders bevorzugt 1,7 bis 2,9, beträgt.

Die vorliegende Erfindung betrifft weiterhin bevorzugt die erfindungsgemäße wässrige Dispersion enthaltend mindestens ein Frischsol in einer Konzentration von 0,5 bis 15 Gew.-%, bevorzugt 3 bis 12 Gew.-%, jeweils bezogen auf das Gesamtgewicht der nichtflüchtigen Anteile der Dispersion.

In einer weiteren Ausführungsform kann die erfindungsgemäße wässrige Dispersion als Komponente b) mindestens ein modifiziertes Kieselsol enthalten.

Wässrige Dispersionen von Siliciumdioxid, so genannte Kieselsole, sind seit langem bekannt. Kieselsole sind kolloidale Lösungen von amorphem Siliciumdioxid in Wasser. Das Siliciumdioxid liegt dabei bevorzugt in Form von kugelförmigen und an der Oberfläche hydroxilierten Partikeln vor. Der Partikeldurchmesser der Kolloidteilchen beträgt in der Regel 1 bis 200 nm, jeweils genäherter Mittelwert berechnet aus spez. Oberfläche. Die Spez. Oberfläche wird nach DIN 66131 - 1993-07 bestimmt. Die zur Teilchengröße korrelierende spezifische BET-Oberfläche, bestimmt nach der Methode von G. N. Sears, Analytical Chemistry Vol. 28, N. 12, Seiten 1981 bis 1983, Dezember 1956, liegt bevorzugt bei 15 bis 2000 m²/g. Die Oberfläche der SiO₂-Teilchen weist bevorzugt eine Ladung auf, die durch ein entsprechendes Gegenion ausgeglichen wird, das zur Stabilisierung der kolloidalen Lösung führt. Die alkalisch stabilisierten Kieselsole besitzen beispielsweise einen pH-Wert von 7 bis 11,5 und enthalten als Alkalisierungsmittel beispielsweise geringe Mengen Na₂O, K₂O, Li₂O, Ammoniak, organische Stickstoffbasen, Tetraalkylammoniumhydroxide oder Alkali- oder Ammoniumaluminate. Kieselsole können auch als semistabile kolloidale Lösungen schwach sauer vorliegen.

Erfindungsgemäß wird mindestens ein modifiziertes Kieselsol eingesetzt. Beispielsweise ist es möglich, durch Beschichtung der Oberfläche mit metallhaltigen Verbindungen, insbesondere aluminiumhaltigen Verbindungen, beispielsweise Al₂(OH)₅Cl, insbesondere an der Oberfläche, modifizierte Kieselsole zu erhalten.

Bevorzugt wird erfindungsgemäß daher mindestens ein an der Oberfläche modifiziertes Kiesel als Komponente b) eingesetzt.

Erfindungsgemäß besonders bevorzugt werden Kieselsole als Komponente b) eingesetzt, die durch eine Oberflächenmodifikation der SiO₂-Partikel durch Zusatz von Aluminationen, beispielsweise [Al(OH)₄]⁻, erhalten werden. Die erfindungsgemäß bevorzugte Verwendung von an der Oberfläche mit Aluminationen modifizierten Kieselsolen bewirkt eine hohe pH-Stabilität und erhöht dadurch die Gelierbeständigkeit.

Das mindestens eine modifizierte Kieselsol weist bevorzugt eine Primärpartikelgröße von 1 bis 100 nm, bevorzugt 2 bis 40 nm, jeweils bestimmt nach DIN 66131 - 1993-07 auf.

Die vorliegende Erfindung betrifft daher insbesondere die erfindungsgemäße wässrige Dispersion, wobei das modifizierte Kieselsol eine Primärpartikelgröße von 1 bis 100 nm, bevorzugt 2 bis 40 nm, aufweist.

Erfindungsgemäß bevorzugt ist das modifizierte Kieselsol ein anionisches, aluminatmodifiziertes Kieselsol.

Die vorliegende Erfindung betrifft daher bevorzugt die erfindungsgemäße wässrige Dispersion, wobei das modifizierte Kieselsol ein anionisches, aluminatmodifiziertes Kieselsol ist.

Weiter bevorzugt wird erfindungsgemäß als Komponente b) bevorzugt mindestens ein modifiziertes Kieselsol eingesetzt, in dem die vorliegenden SiO₂-Partikel als diskrete unvernetzte Primärpartikel vorliegen und weiter bevorzugt über Hydroxylgruppen an der Partikel-Oberfläche verfügen.

Wird erfindungsgemäß als Komponente b) mindestens ein modifiziertes Kieselsol eingesetzt, so liegt dieses bevorzugt zu 0,25 bis 10 Gew.-%, besonders bevorzugt 1,5 bis 10 Gew.-%, jeweils bezogen auf das Gesamtgewicht der nichtflüchtigen Anteile der Dispersion, vor.

Als Komponente b) kann in der erfindungsgemäßen wässrigen Dispersion auch eine Mischung von mindestens einem Frischsol und mindestens einem modifizierten Kieselsol eingesetzt werden. Auch zu dieser Mischung gilt das bereits zu dem mindestens einen Frischsol und dem mindestens einen modifizierten Kieselsol Gesagte.

Bevorzugt liegt in der Mischung aus mindestens einem Frischsol und mindestens einem modifizierten Kieselsol das mindestens eine Frischsol in einer Menge von 0,5 bis 15 Gew.-%, besonders bevorzugt 3 bis 12 Gew.-%, und das mindestens eine modifizierte Kieselsol in einer Menge von 0,25 bis 10 Gew.-%, besonders bevorzugt 1,5 bis 10 Gew.-%, jeweils bezogen auf die Mischung aus mindestens einem Frischsol und mindestens einem modifizierten Kieselsol vor, wobei die Summer der Mengen von mindestens einem Frischsol und mindestens einem modifizierten Kieselsol jeweils 100 Gew.-% ergibt.

Eine entsprechende Mischung kann im Allgemeinen nach dem Fachmann bekannten Verfahren hergestellt werden, beispielsweise durch Vermischen der beiden Komponenten in den jeweiligen Mengen.

Als Komponente c) enthält die erfindungsgemäße wässrige Dispersion gegebenenfalls mindestens ein Acrylsäure oder einen Acrylsäureester enthaltendes Copolymer.

Erfindungsgemäß bevorzugt werden als Komponente c) Copolymere enthaltend mindestens Acrylsäure, mindestens einen Acrylsäureester und/oder mindestens ein weiteres Monomer, beispielsweise Styrol, eingesetzt.

Besonders bevorzugt werden erfindungsgemäß als Komponente c) Acrylsäureester-Copolymere enthaltend mindestens einen Acrylsäureester und mindestens ein weiteres Monomer, insbesondere Styrol, eingesetzt.

Geeignete Acrylsäureester-Copolymere, insbesondere Styrol-Acrylsäureester-Copolymere, insbesondere wässrige Dispersionen davon, und Verfahren zu deren Herstellung sind dem Fachmann an sich bekannt. Sie sind beispielsweise beschrieben in Irving Skeist Handbook of Adhesives, 2. Edition, 1977, Seite 528 ff "Acrylic adhesives and sealants, K. Eisenträger, W. Druschke".

Die erfindungsgemäß bevorzugt eingesetzten Acrylsäureester-Styrol-Copolymere enthalten bevorzugt 50 bis 80 Gew.-% Styrol und 20 bis 50 Gew.-% ein oder mehrere Acrylsäureester, bevorzugt von Alkoholen mit 1 bis 18 C-Atomen, insbesondere ausgewählt aus der Gruppe bestehend aus Methylacrylat, Ethylacrylat, Propylacrylat, Butylacrylat, 2-Ethylhexylacrylat und Mischungen davon, gegebenenfalls im Gemisch mit Methacrylsäureester wie Methylmethacrylat, und 0 bis 10 Gew.-% ein oder mehrere ethylenisch ungesättigte, funktionelle Comonomere, wobei sich Mengenangaben in Gew.-% jeweils auf 100 Gew.-% addieren.

Erfindungsgemäß besonders bevorzugt werden als Komponente b) Styrol-Acrylsäureester-Copolymere mit niedrigen Viskositäten, insbesondere im Bereich < 400 mPa·s, gemessen bei 250 1/s, 23 °C gemäß DIN EN ISO 3219-1994, und weiter bevorzugt mit einem Tg < 0 °C. Diese bevorzugten Styrol-Acrylsäureester weisen den Vorteil auf, dass die Klebkraft in den erfindungsgemäßen Formulierungen erhöht wird.

Das mindestens eine Acrylsäure oder einen Acrylsäureester enthaltendes Copolymer ist in der erfindungsgemäßen wässrigen Dispersion bevorzugt in einer Menge von 12 bis 35 Gew.-%, besonders bevorzugt 15 bis 30 Gew.- %, ganz besonders bevorzugt 18 bis 28 Gew.-%, jeweils bezogen auf nichtflüchtige Anteile der wässrigen Dispersion, enthalten.

Besonders als Komponente b) geeignete Styrol-Acrylsäureester-Copolymere gemäß der vorliegenden Erfindung sind kommerziell erhältlich, beispielsweise unter dem Handelsnamen Acronal^{®}, von der BASF Deutschland AG.

Die erfindungsgemäße wässrige Dispersion enthält als optionale Komponente d) gegebenenfalls weitere Additive.

Sind in der erfindungsgemäßen wässrigen Dispersion weitere Additive enthalten, so liegen diese beispielsweise in einer Menge von 0,1 bis 30 Gew.-%, bezogen auf die nichtflüchtigen Anteile der wässrigen Dispersion, vor.

Geeignete Additive für Klebstoffformulierungen sind dem Fachmann an sich bekannt und beispielsweise ausgewählt aus der Gruppe bestehend aus Netzmitteln, Tackifier-Harzen, Pigmenten, Flammschutzmitteln, Antioxidantien, Dispergierhilfsmitteln, Emulgatoren, Haftvermittlern, Entschäumern, Alterungsschutzmittel, Oxidationsschutzmittel, UV-Schutzmittel und Mischungen davon.

Geeignete Netzmittel sind beispielsweise Polyphosphate, wie Natriumhexametaphosphat, Naphthalinsulfonsäure, Ammonium- oder Natriumpolyacryl-Säuresalze. Ebenfalls geeignet sind Salze von Polyacrylsäuren, insbesondere Na-Salze von Polyacrylsäuren, wie beispielsweise kommerziell erhältlich unter dem Handelsnamen Dispex N40 von der BASF SE. Netzmittel werden erfindungsgemäß bevorzugt in einer Menge von 0,2 bis 0,6 Gew. -%, bezogen auf nichtflüchtige Anteile der wässrigen Disperion, verwendet.

Klebrig machende Harze, beispielsweise unmodifizierte oder modifizierte Naturharze wie Kollophoniumester, Kohlenwasserstoffharze oder synthetische Harze wie Phthalatharze können der erfindungsgemäßen, wässrigen Dispersion in dispergierter Form zugesetzt werden, siehe dazu beispielsweise "Klebharze" R. Jordan, R. Hinterwaldner, Seiten 75 bis 115, Hinterwaldner Verlag München 1994. Bevorzugt sind Alkylphenolharz- und Terpenphenolharz-Dispersionen mit Erweichungspunkten größer 70 °C, besonders bevorzugt größer 110 °C.

Beispiele für geeignete Alterungsschutzmittel, Oxidationsschutzmittel und/oder UV-Schutzmittel sind solche auf Basis von oligofunktionellen, sekundären, aromatischen Aminen oder oligofunktionellen, substituierten Phenolen, wie Produkte vom Typ 6-PPD (N-(1,3-Dimethylbutyl)-N'-phenyl-p-phenylendiamin, beispielsweise Vulkanox^{®} der Lanxess Deutschland GmbH, DTPD, DDA, BPH, BHT oder Verbindungen auf Basis von HALS (hindered amine light stabilisers), Benzotriazolen, Oxalaniliden, Hydroxybezophenonen und/oder Hydroxyphenyl-S-triazine. Bevorzugt Typischerweise werden entsprechende Alterungsschutzmittel, Oxidationsschutzmittel und/oder UV-Schutzmittel in emulgierter Form als wässrige Dispersion eingebracht. Alterungsschutzmittel, Oxidationsschutzmittel und/oder UV-Schutzmittel können erfindungsgemäß in einer Menge von 0,1 bis 5 Gew.-Teilen, bevorzugt 1 bis 3 Gew.-Teilen, besonders bevorzugt 1,5 bis 2,5 Gew.-Teile, jeweils bezogen auf die vorhandene Menge an Polychloropren, vorliegen.

Die vorliegende Erfindung betrifft daher bevorzugt die erfindungsgemäße Dispersion, wobei
a) das mindestens eine Polychloropren zu 65 bis 94 Gew.-%, bevorzugt 70 bis 90 Gew.-%,
b) die mindestens einem Frischsol und mindestens einem modifizierten Kieselsol das mindestens eine Frischsol in einer Menge von 0,5 bis 15 Gew.-%, besonders bevorzugt 3 bis 12 Gew.-%, und das mindestens eine modifizierte Kieselsol in einer Menge von 0,25 bis 10 Gew.-%, besonders bevorzugt 1,5 bis 10 Gew.-% und
c) mindestens ein Acrylsäure oder einen Acrylsäureester enthaltendes Copolymer zu 12 bis 35 Gew.-%, bevorzugt 13 bis 30 Gew.-%, besonders bevorzugt 14 bis 28 Gew.-%,
jeweils bezogen auf das Gesamtgewicht der nichtflüchtigen Anteile der Dispersion, vorliegen, und die Summe der vorliegenden Komponenten jeweils 100 Gew.-% ergibt.

Für den Fall, dass in der erfindungsgemäßen Dispersion als Komponente b) mindestens ein Frischsol eingesetzt wird, so liegt dieses bevorzugt in einer Menge von 0,5 bis 15,0 Gew.-%, besonders bevorzugt 3 bis 12 Gew.-%, jeweils bezogen auf das Gesamtgewicht der nichtflüchtigen Anteile der Dispersion, vor, und die Summe der vorliegenden Komponenten ergibt jeweils 100 Gew.-%.

Für den Fall, dass in der erfindungsgemäßen Dispersion als Komponente b) mindestens ein modifiziertes Kieselsol eingesetzt wird, so liegt dieses bevorzugt in einer Menge von 0,25 bis 10,0 Gew.-%, besonders bevorzugt 1,5 bis 10,0 Gew.-%, jeweils bezogen auf das Gesamtgewicht der nichtflüchtigen Anteile der Dispersion, vor, und die Summe der vorliegenden Komponenten ergibt jeweils 100 Gew.-%.

Für den Fall, dass in der erfindungsgemäßen Dispersion als Komponente b) eine Mischung aus mindestens einem Frischsol und mindestens einem modifizierten Kieselsol eingesetzt wird, so liegt diese bevorzugt in einer Menge von 0,5 bis 20 Gew.-%, besonders bevorzugt 3 bis 15 Gew.-%, jeweils bezogen auf das Gesamtgewicht der nichtflüchtigen Anteile der Dispersion, vor, und die Summe der vorliegenden Komponenten ergibt jeweils 100 Gew.-%.

Die erfindungsgemäße wässrige Dispersion weist einen pH-Wert von 9,7 bis 10,8, bevorzugt von 10,0 bis 10,5 auf.

Die erfindungsgemäße wässrige Dispersion weist bevorzugt eine Viskosität von 500 bis 7.000 mPa·s, besonders bevorzugt 1500 bis 6.000 mPa·s, jeweils bestimmt nach DIN EN ISO 2555 - 2018-09 mittels eines Brookfield Rotationsviskosimeters, auf.

Die vorliegende Erfindung betrifft auch ein Verfahren zur Herstellung der erfindungsgemäßen wässrigen Dispersion, wobei a) mindestens ein Polychloropren als wässrige Dispersion vorgelegt wird, und b) mit mindestens einer Komponente ausgewählt aus der Gruppe bestehend aus Frischsol, einem modifizierten Kieselsol und Mischungen davon, c) mindestens ein Acrylsäure oder einen Acrylsäureester enthaltendes Copolymer, und d) gegebenenfalls mindestens einem weiteren Additiv, vermischt wird, wobei die wässrige Dispersion einen pH-Wert von 9,7 bis 10,8 aufweist.

Bevorzugt betrifft die vorliegende Erfindung das Verfahren zur Herstellung der erfindungsgemäßen wässrigen Dispersion, umfassend mindestens die Schritte:
(A) Bereitstellen der Komponenten a), b) und c) in den entsprechenden Mengen, und
(B) Vermischen der in Schritt (A) bereitgestellten Komponenten, um die wässrige Dispersion zu erhalten.

Zur Herstellung der erfindungsgemäßen wässrigen Dispersionen werden die Mengenverhältnisse der einzelnen Komponenten so gewählt, dass die resultierende erfindungsgemäße Dispersion die Komponenten a), b) und c) in den vorangehend angegebenen Mengen enthält.

In einer bevorzugten Ausführungsform der vorliegenden Erfindung wird die erfindungsgemäße wässrige Dispersion hergestellt, indem eine mindestens ein Polychloropren enthaltende Dispersion mit mindestens einem Acrylsäure oder einen Acrylsäureester enthaltenden Copolymer und mindestens einem Frischsol und/oder mindestens einem modifizierten Kieselsol, und gegebenenfalls weiteren Additiven, insbesondere den oben genannten Klebstoffhilfs- und Zusatzmitteln, vermischt werden.

Weiter bevorzugt werden das mindestens eine Polychloropren als wässrige Dispersion, das mindestens eine modifizierte Kieselsol als wässrige Dispersion, die Klebstoffhilfs- und Zusatzmittel als wässrige Dispersion und die mindestens eine Acrylsäureester-Copolymer das mit Frischsol in der wässrigen Dispersion vordispergiert wird, eingesetzt.

In einer weiteren bevorzugten Ausführungsform der vorliegenden Erfindung wird die erfindungsgemäße wässrige Dispersion hergestellt, indem eine mindestens ein Polychloropren enthaltende Dispersion vorgelegt wird und eine Mischung aus mindestens einem Acrylsäure oder einen Acrylsäureester enthaltenden Copolymer und mindestens einem Frischsol zugegeben wird. Anschließend können gegebenenfalls weitere Additive, insbesondere die oben genannten Klebstoffhilfs- und Zusatzmittel, zugegeben werden.

Die vorliegende Erfindung betrifft auch eine Klebstoffzusammensetzung, insbesondere eine 1K(omponenten-Klebstoffzusammensetzung), mindestens enthaltend die erfindungsgemäße wässrige Dispersion.

Die vorliegende Erfindung betrifft auch die Verwendung der erfindungsgemäßen wässrigen Dispersion zur Herstellung von Klebstoffzusammensetzungen, insbesondere von 1K(omponenten-Klebstoffzusammensetzungen).

Erfindungsgemäß werden die Klebstoffzusammensetzung bevorzugt in einer Auftragsmenge von 130 bis 150 g/m² nass eingesetzt.

Die vorliegende Erfindung betrifft auch die Verwendung der erfindungsgemäßen wässrigen Dispersion für die Verklebung von Schaumsubstraten nach dem Sprühkoagulationsverfahren.

Die vorliegende Erfindung betrifft auch einen Klebstoffverbund, enthaltend mindestens ein mit einer erfindungsgemäßen wässrigen Dispersion verklebtes Substrat und/oder Flächengebilde.

Die vorliegende Erfindung betrifft auch die Verwendung der erfindungsgemäßen wässrigen Dispersion zur Verklebung von Holz, Papier, thermoplastischen Kunststoffen, elastomeren Kunststoffen, thermoplastisch-elastomeren Kunststoffen, Vulkanisaten, textilen Geweben, Gewirken, Geflechten, Leder, Metallen, Keramik, Asbestzement, Steinzeug, Beton, Schaumstoffen, jeweils miteinander und/oder an porige Substrate, bevorzugt mit einer Dichte von weniger als 1 kg/Liter, insbesondere zur Verklebung von Schaumstoffen in der Mattratzen-, Möbel- und/oder Polsterverklebung.

Die vorliegende Erfindung betrifft auch ein Verfahren zur Herstellung eines Verbundmaterials, wobei mindestens zwei Fügeteile des Verbundmaterials mit der erfindungsgemäßen wässrige Dispersion verklebt werden.

Die erfindungsgemäße wässrige Dispersion kann im Allgemeinen mittels aller gängigen Applikationsformen auf die Substrate aufgebracht werden, insbesondere durch Streichen, Rollen, Spritzen und/oder Sprühen, insbesondere durch Sprühauftrag, Pinselauftrag oder Walzenauftrag. Bevorzugt erfolgt der Auftrag der erfindungsgemäßen Klebstoffe mittels Sprühapplikation.

Erfindungsgemäß geeignete Substrate sind beispielsweise Holz, Papier, thermoplastische Kunststoffe, elastomere Kunststoffe, thermoplastisch-elastomere Kunststoffe, Vulkanisate, textile Gewebe, Gewirke, Geflechte, Leder, Metalle, Keramik, Asbestzement, Steinzeug, Beton, Schaumstoffe, jeweils miteinander und/oder an porige Substrate, bevorzugt mit einer Dichte von weniger als 1 kg/Liter.

Insbesondere betrifft die vorliegende Erfindung das erfindungsgemäße Verfahren zur Herstellung einer Nass-in-Nass Verklebung, wobei eine erfindungsgemäße Klebstoffzusammensetzung enthaltend die erfindungsgemäße wässrige Dispersion zum Beispiel mittels Sprühauftrag, Walzenauftrag oder Pinselauftrag auf ein Schaumstoff-Substrat appliziert wird, und nach einer Ablüftungszeit von beispielsweise < 5 min, bevorzugt < 2 min, besonders bevorzugt ≤ 1 min, eine Nassklebung vor Filmbildung erzeugt wird.

### Beispiele

Die vorliegende Erfindung wird durch die folgenden Beispiele näher erläutert:
Tabelle 1 zeigt die in den erfindungsgemäßen Beispielen und/oder Vergleichsbeispielen eingesetzten Inhaltsstoffe:

**Tabelle 1: Eingesetzte Komponenten**

| Typ | Handelsname | Eigenschaften | Eingesetzte Form |
|---|---|---|---|
| Polychloropren | Dispercoll^{®} C 84 | 2-Chlorbutadien-Polymer mit hohem Kristallisationsgrad (Shore A Härte >70) | wässrige Dispersion, 55 Gew.-% Feststoff |
| Acrylsäureester-Styrol-Copolymer | Acronal^{®} 5400 | Copolymer aus Styrol und Acrylsäureester | wässrige Dispersion, 57 Gew.-% Feststoff |
| Kieselsol | Levasil^{®} CS 15-340 P | amorphes Siliziumdioxid, aluminatmodifiziert, mittlere Teilchengröße ca. 15 nm | wässrige Dispersion, 15 Gew.-% Feststoff |
| Frischsol | Levasil^{®} CS 6-3P | Kieselsäure und Oligokieselsäure | wässrige Lösung, 6 Gew.-% Feststoff |
| pH-Regulator | Glycin | Aminoessigsäure | Feststoff |

### Methoden/Messmethoden:

Folgende Methoden bzw. Messmethoden kamen bei den erfindungsgemäßen Beispielen und/oder den Vergleichsbespielen zum Einsatz.

### Sprühverfahren:

Die Klebstoffformulierung wurde mittels einer Sprühpistole (Walther PILOT PREMIUM ND, p = ca. 1,5 bar, Sprühdüse mit Durchmesser ca. 1,0 mm) auf das Prüfmaterial appliziert.

### Beschichtung mit dem Pinsel:

Die Klebstoffformulierung wurde mittels Pinsel beidseitig auf den PU-Schaumkörper aufgetragen.

### Prüfkörper:

Es wurden PU-Schaumkörper der Firma stn/schaumstoff-technik-Nürnberg GmbH verwendet. Typ ST 5540, Abmessungen der Prüfkörper: 101 mm × 49 mm × 30 mm, Materialbasis PUR, Farbe weiß, Bruttogewicht 40 kg/m², Nettorohdichte 38 kg/m³ gemäß ISO-845: 2009-10, Stauchhärte bei 40% 5,5 (kPa) gemäß DIN EN ISO 3386: 2015-10, Zugfestigkeit > 120 kpa gemäß DIN EN ISO 1798: 2008-04, Bruchdehnung > 110% gemäß ISO-1798: 2008-04, Druckverformungsrest < 4 gemäß DIN EN ISO-1856: 2018-11 (50%/70 °C/22h)

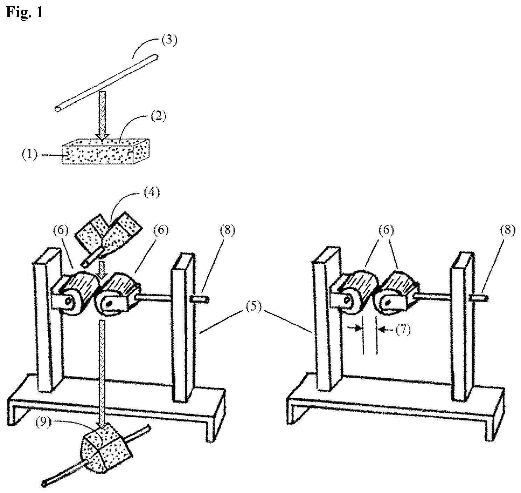

### Bestimmung der Anfangsfestigkeit (siehe auch Figur 1):

Als Prüfmaterial wurden die zuvor genannten Prüfkörper verwendet. Zur Beurteilung der Anfangsfestigkeit wurden die Probekörper unmittelbar nach dem Klebstoff-Auftrag auf die Oberseite (2) der Schaumstoffkörper (1) mittels Sprühkoagulationsverfahren (Aufwandmenge 130 bis 150 g/m² nass) mit einem Holzstab (3) (Vierkant 7 x 7 mm)) in der Mitte geknickt (4) und mittels der Prüfvorrichtung (5) durch 2 Stahlrollen (6) (Durchmesser jeweils 40 mm, Länge jeweils 64 mm) geführt, deren tangentialer Abstand (7) zuvor mit der Gewindespindel (8) auf 10 mm eingestellt wurde.

### Beurteilung der Anfangsfestigkeit:

Eine sofortige Anfangsfestigkeit war vorhanden, wenn sich der Probekörper bzw. die Klebnaht (9) trotz der im Probekörper vorhandenen Rückstellkräfte nicht mehr öffnete.

Zur besseren Quantifizierung der Anfangsfestigkeit wurde diese wie folgt bewertet:

| | |
|---|---|
| "1": | Die Spannung wurde nach dem einmaligen Durchziehen des Prüfkörpers durch den Spalt zwischen den beiden Walzen sofort gehalten. Wurde der Schaumkörper nach 120 s beidseitig auseinandergezogen und es erfolgte Materialausriss, bzw. ließ er sich nur mit sehr hohem Kraftaufwand wieder öffnen, dann erhielt die Anfangsfestigkeit die Bewertung "1". |
| "2": | Die Spannung wurde nach dem einmaligen Durchziehen des Prüfkörpers durch den Spalt zwischen den beiden Walzen sofort gehalten. Ließ sich der Schaumkörper nach 120 s bei beidseitigem Auseinanderziehen ohne hohen Kraftaufwand wieder öffnen, dann wurde die Anfangsfestigkeit mit "2" bewertet. |
| "3". | Der Prüfkörper öffnete sich nach dem einmaligen Durchziehen des Prüfkörpers durch den Spalt zwischen den beiden Walzen. Erst durch Wiederholung bzw. per Handdruck (1x ca. 1 s angedrückt) blieb der Prüfkörper geschlossen, Bewertung "3". |
| "4": | Die Spannung wurde selbst bei mehrmaligem Andrücken (per Walzen und manuell) nicht gehalten, Bewertung "4". |

### Bestimmung der Viskosität:

Die Viskosität der Dispersionen wurde mittels Brookfield Viskosimeter nach DIN ISO 2555: 2018-09 ermittelt. Die Spindel wurde dazu vorsichtig, möglichst ohne Luftblasenbildung, in die zu messende Dispersion eingetaucht. Dazu wurde die Flasche, die die zu untersuchende Probe enthielt, auf eine Hebebühne gestellt und vorerst soweit hochgefahren, dass die Spindel an der Antriebsachse befestigt werden konnte, ohne dass der Spindelkörper aus der Dispersion auftaucht. Die Hebebühne wurde weiter hochgefahren, bis die Spindel bis zur Eintauchrille am Spindelschaft in die Probe eintauchte. Der Motor wurde eingeschaltet. Sobald sich die LED-Anzeige des Messwertes stabilisiert hatte, wurde der Messwert abgelesen.

Abhängig vom Viskositätsbereich wurde mit folgt verfahren:
Viskositätsbereich < 1.000 mPa·s: Messung mit Spindel #2 bei 60 U/min.
Viskositätsbereich 1.000 bis 2.500 mPa·s: Messung mit Spindel #2 bei 12 U/min.
Viskositätsbereich 2.500 bis 10.000 mPa·s: Messung mit Spindel #3 bei 12 U/min.

### Bestimmung des pH-Wertes:

In die zu prüfende Dispersion bzw. Lösung wurde eine Einstab-Messelektrode (Metrohm pH Meter) eingetaucht.

### Herstellung der Klebstoffformulierungen:

Für die Herstellung einer Formulierung wurde die Polychloroprendispersion in einem Becherglas vorgelegt. Nacheinander wurden dann das Frischsol und/oder das modifizierte Kieselsol sowie bei Bedarf Acrylsäureester-Styrol-Copolymer unter Rühren zugegeben. Nach erfolgter Einmischung aller gewünschten Bestandteile kann bei Bedarf die pH-Einstellung durch Zugabe von Glycin-Pulver bis Erreichen des Ziel-pH-Wertes der Formulierung erfolgen.

**Tabelle 2: Langzeitlagerstabilität der Mischung aus Polychloropren und Aluminat mod. Kieselsol**

| **Beispiel-Nr.** | **1** | **2** | **3** | **4** | **5** | **6** |
|---|---|---|---|---|---|---|
| **Dispercoll^{®} C 84** | 190 | 180 | 170 | 160 | 150 | 140 |
| **Levasil^{®} CS 15-340 P** | 10 | 20 | 30 | 40 | 50 | 60 |
| **Viskosität [mPa·s]** | 1240 | 3800 | 6500 | 13000 | 24000 | Paste |
| **pH-Wert** | 10,8 | 10,6 | 10,4 | 10,2 | 10,0 | 9,9 |
| **Anfangsfestigkeit** | 4 | 4 | 4 | 4 | 3 | 3 |

| **Nach 7 Monaten** | | | | | | |
|---|---|---|---|---|---|---|
| **Viskosität [mPa·s]** | 1790 | 4600 | 6300 | 12600 | 20000 | Paste |
| **pH-Wert** | 10,2 | 9,9 | 9,7 | 9,4 | 9,4 | 9,3 |
| **Anfangsfestigkeit** | 4 | 4 | 3 | 1 | 1 | Nicht streichfähig |

### Alle Angaben in Gew.-%, sofern nicht anders angegeben. Auftragsart: Pinsel

### V Vergleich

Die erfindungsgemäße Mischung aus Polychloropren und dem Aluminat modifizierten Kieselsol hat eine ausgezeichnete Lagerstabilität. Bei keinem der Ansätze kam es zu einer Entmischung oder Koagulation. Die pH-Werte und die Viskositäten haben sich nach einer Lagerzeit von 7 Monaten kaum verändert. Es wird eine sofortige Nassverklebung erst bei pH Werten unter 9,5 erreicht.

**Tabelle 3: Reduzierung des pH-Wertes von Polychloropren mit Frischsol**

| **Beispiel-Nr.** | **7** | **8** | **9** | **10** | **11** | **12** | **13** | **14** | **15** | **16** | **V17** |
|---|---|---|---|---|---|---|---|---|---|---|---|
| **Dispercoll^{®} C 84** | 190 | 180 | 170 | 160 | 150 | 140 | 130 | 120 | 100 | 784 | 784 |
| **Levasil^{®} CS 6-3 P** | 10 | 20 | 30 | 40 | 50 | 60 | 70 | 80 | 90 | 42 | 0 |
| **Acronal^{®} 5400** | - | - | - | - | - | - | - | - | - | 216 | 216 |
| **Glycin** | - | - | - | - | - | - | - | - | - | 0 | 1,0 |
| **Viskosität [mPa·s]** | >100 | >100 | >100 | >100 | >100 | >100 | >100 | >100 | >100 | >100 | >100 |
| **pH-Wert** | 10,9 | 10,7 | 10,5 | 10,3 | 10,0 | 9,8 | 9,5 | 9,3 | 9,0 | 10,2 | 10,2 |
| **Anfangsfestigkeit** | 4 | 4 | 3 | 1 | 1 | 1 | 1 | 1 | 1 | 1 | 3 |

| **Nach 1 Monat** | | | | | | | | | | | |
|---|---|---|---|---|---|---|---|---|---|---|---|
| **pH-Wert** | 11,0 | 10,8 | 10,6 | 10,4 | 10,1 | 9,9 | 9,6 | 9,4 | 9,3 | 10,3 | 10,2 |
| **Lagerstabilität** | **1)** | 1) | 1) | 2) | 2) | 2) | 2) | 2) | 2) | 1) | 3) |

### Alle Angaben in Gew.-%, sofern nicht anders angegeben. Auftragsart: Pinsel

1) Niedrig viskose
2) Gelbildung
3) Koagulation

Der erfindungsgemäße Einsatz einer Frischsollösung senkt den pH-Wert deutlich ab, ohne jedoch die Viskosität zu erhöhen. Als Vorteil konnte eine sofortige Nassverklebung schon bei pH-Werten über 10,0 festgestellt werden. Negativ machte sich jedoch die Polykondensation der Frischsollösung bemerkbar, die nach einer Lagerung der Mischungen auftrat.

Der Zusatz eines Acrylats zur Formulierung führte in Beispiel V17 gemäß Stand der Technik zu einer schlechteren Nassverklebung und baldiger Koagulation, während sie in Gegenwart des Frischsols (Beispiel 16, erfindungsgemäß) stabilisierend wirkte.

**Tabelle 4: Stabilisierung der erfindungsgemäßen Polychloropren - Frischsol Mischung durch Acrylat**

| **Beispiel-Nr.** | **18** | **19** | **20** | **21** | **22** | **23** | **24** | **25** | **26** |
|---|---|---|---|---|---|---|---|---|---|
| **Dispercoll^{®} C 84, pH 12,6** | 392,2 | 392,2 | 392,2 | - | - | - | - | - | - |
| **Dispercoll^{®} C 84, pH 10** | - | - | - | 392,2 | 392,2 | 392,2 | - | - | - |
| **Dispercoll^{®} C 84, pH 9,5** | - | - | - | - | - | - | 392,2 | 392,2 | 392,2 |
| **pH-Wert Einstellung durch Glycin** | - | - | - | ja | ja | ja | ja | ja | ja |
| **Levasil^{®} CS 6-3 P** | 5 | 10 | 15 | 5 | 10 | 15 | 5 | 10 | 15 |
| **Acronal^{®} 5400** | 107,8 | 107,8 | 107,8 | 107,8 | 107,8 | 107,8 | 107,8 | 107,8 | 107,8 |
| **Viskosität [mPa·s]** | 284 | 230 | 180 | 125 | 160 | 220 | 128 | 154 | 194 |
| **pH-Wert** | 11,1 | 10,7 | 10,4 | 9,7 | 9,7 | 9,7 | 9,3 | 9,3 | 9,3 |

| **Nach 5 Monaten** | | | | | | | | | |
|---|---|---|---|---|---|---|---|---|---|
| **Viskosität [mPa·s]** | 311 | 250 | 192 | 174 | 200 | 376 | 185 | 189 | 239 |
| **pH-Wert** | 10,1 | 10,2 | 10,3 | 9,4 | 9,4 | 9,4 | 9,2 | 9,1 | 9,1 |
| **Anfangsfestigkeit** | 1 | 1 | 2 | 1 | 1 | 1 | 1 | 1 | 1 |

### Alle Angaben in Gew.-%, sofern nicht anders angegeben. Auftragsart: Pinsel

In den Beispielen 18 bis 26 wurde eine erfindungsgemäße Mischung aus Polychloropren, Frischsol und Acronal hergestellt und gelagert. Es zeigte sich, dass das Frischsol unter diesen Bedingungen nicht zu einer Polykieselsäure kondensiert, sondern auf dem Acronal mit anderen ionischen Gruppen interagiert und sich stabilisiert, so dass sich selbst nach einer Lagerzeit von 5 Monaten Viskosität, pH-Wert und Anfangsfestigkeit nicht geändert haben.

In den erfindungsgemäßen Beispielen 18 bis 20 kann die Polychloroprendispersion durch den Zusatz von Acrylat und Frischsol selbst bei einem pH Wert von < 10,0 sofort verklebt werden, allerdings bei niedriger Mischungsviskosität.

**Tabelle 5: Herstellung von erfindungsgemäßen hochviskosen, lagerstabilen Klebstoff-Formulierung auf Basis Polychloropren**

| **Beispiel-Nr.** | **27** | **28** | **29** | **30*** | **31*** | **32*** | **33*** | **34*** | **35*** | **36*** | **37*** | **38*** | **39*** | **40*** | **41*** | **42*** |
|---|---|---|---|---|---|---|---|---|---|---|---|---|---|---|---|---|
| **Dispercoll^{®} C 84** | 190 | 180 | 170 | 190 | 180 | 170 | 190 | 180 | 190 | 180 | 190 | 190 | 190 | 190 | 190 | 190 |
| **Acronal^{®} 5400** | - | - | - | 40 | 40 | 40 | 40 | 40 | 40 | 40 | 30 | 30 | - | - | - | - |
| **Levasil^{®} CS 15-340 P** | 10 | 20 | 30 | 10 | 20 | 30 | - | - | 10 | 20 | 15 | 10 | - | 10 | 15 | 10 |
| **Levasil^{®} CS 6-3 P** | - | - | - | - | - | - | 10 | 20 | 10 | 20 | 10 | 10 | - | - | - | - |
| **Mischung A (Tab. 6)** | - | - | - | - | - | - | - | - | - | - | - | - | 50 | 50 | - | - |
| **Mischung B (Tab. 6)** | - | - | - | - | - | - | - | - | - | - | - | - | - | - | 40 | 40 |
| **Viskosität [mPa·s]** | 1100 | 2000 | 4200 | 341 | 1300 | 1900 | 8,0 | 140 | 400 | 3000 | 2000 | 400 | 110 | 1550 | 2020 | 1460 |
| **pH-Wert** | 10,6 | 10,3 | 10,0 | 10,2 | 10,0 | 9,9 | 10,5 | 10,2 | 10,1 | 9,9 | 10,2 | 10,3 | 10,2 | 10,2 | 10,1 | 10,2 |
| **Anfangsfestigkeit** | 4 | 3 | 3 | 2 | 1 | 1 | 2 | 1 | 1 | 1 | 1 | 1 | 1 | 1 | 1 | 1 |

### Alle Angaben in Gew.-%, sofern nicht anders angegeben. Auftragsart: 1K Sprühen

### * Erfindungsgemäß

**Tabelle 6: Mischungen A und B**

| **Komponente** | **Feststoffgehalt** | **Mischung A** | **Mischung B** |
|---|---|---|---|
| **Acronal^{®} 5400** | 57 | 416 | 400 |
| **Levasil^{®} CS 6-3 P** | 6 | 83 | 100 |

Alle Angaben in Gew.-%, sofern nicht anders angegeben

## Patentansprüche

1. Wässrige Dispersion mindestens enthaltend
a) mindestens ein Polychloropren,
b) mindestens eine Komponente ausgewählt aus der Gruppe bestehend aus Frischsol, einem modifizierten Kieselsol und Mischungen davon,
c) mindestens ein Acrylsäure oder einen Acrylsäureester enthaltendes Copolymer, und
d) gegebenenfalls weitere Additive,
wobei die wässrige Dispersion einen pH-Wert von 9,7 bis 10,8 aufweist.

2. Dispersion nach Anspruch 1, **dadurch gekennzeichnet, dass** das mindestens eine Polychloropren in Partikeln mit einer mittleren Teilchengröße von 60 bis 220 nm vorliegt.

3. Dispersion nach Anspruch 1 oder 2, **dadurch gekennzeichnet, dass** das Frischsol als wässrige Kieselsäurelösung mit einem Feststoffgehalt von 1 bis 10 Gew.-%, bevorzugt 2 bis 8 Gew.-%, besonders bevorzugt 3,5 bis 6,5 Gew.-%, eingesetzt wird.

4. Dispersion nach einem der Ansprüche 1 bis 3, **dadurch gekennzeichnet, dass** das modifizierte Kieselsol ein anionisches, aluminatmodifiziertes Kieselsol ist.

5. Dispersion nach einem der Ansprüche 1 bis 4, **dadurch gekennzeichnet, dass** das mindestens eine Acrylsäure oder einen Acrylsäureester enthaltendes Copolymer mindestens ein Styrol-Acrylsäureester-Copolymer ist.

6. Dispersion nach einem der Ansprüche 1 bis 5, **dadurch gekennzeichnet, dass**
a) das mindestens eine Polychloropren zu 65 bis 94 Gew.-%, bevorzugt 70 bis 90 Gew.-%,
b) die mindestens eine Komponente ausgewählt aus der Gruppe bestehend aus Frischsol und mindestens einem modifizierten Kieselsol das mindestens eine Frischsol in einer Menge von 0,5 bis 15 Gew.-%, besonders bevorzugt 3 bis 12 Gew.-%, und das mindestens eine modifizierte Kieselsol in einer Menge von 0,25 bis 10 Gew.-%, besonders bevorzugt 1,5 bis 10 Gew.-%, und
c) mindestens ein Acrylsäure oder einen Acrylsäureester enthaltendes Copolymer zu 12 bis 35 Gew.-%, bevorzugt 13 bis 30 Gew.-%, besonders bevorzugt 14 bis 28 Gew.-%,
jeweils bezogen auf das Gesamtgewicht der nichtflüchtigen Anteile der Dispersion, vorliegen, und die Summe der vorliegenden Komponenten jeweils 100 Gew.-% ergibt.

7. Dispersion nach einem der Ansprüche 1 bis 6, **dadurch gekennzeichnet, dass** sie eine Viskosität von 500 bis 7.000 mPa·s, bevorzugt 1500 bis 6.000 mPa·s, jeweils bestimmt nach DIN ISO 2555: 2018-09 mittels eines Brookfield Rotationsviskosimeters, aufweist.

8. Verfahren zur Herstellung der wässrigen Dispersion nach einem der Ansprüche 1 bis 7, **dadurch gekennzeichnet, dass** mindestens ein Polychloropren als wässrige Dispersion vorgelegt wird, und mit mindestens einer Komponente ausgewählt aus der Gruppe bestehend aus Frischsol, einem modifizierten Kieselsol und Mischungen davon, mindestens ein Acrylsäure oder einen Acrylsäureester enthaltendes Copolymer, und gegebenenfalls mindestens einem weiteren Additiv, vermischt wird, wobei die wässrige Dispersion einen pH-Wert von 9,7 bis 10,8 aufweist.

9. Klebstoffzusammensetzung, mindestens enthaltend die Dispersion nach einem der Ansprüche 1 bis 7.

10. Verwendung der Dispersion nach einem der Ansprüche 1 bis 7 zur Herstellung von Klebstoffzusammensetzungen.

11. Verwendung der Dispersion nach einem der Ansprüche 1 bis 7 für die Verklebung von Schaumsubstraten nach dem Sprühkoagulationsverfahren.

12. Klebstoffverbund, enthaltend mindestens ein mit einer wässrigen Dispersion gemäß einem der Ansprüche 1 bis 7 verklebtes Substrat und/oder Flächengebilde.

13. Verwendung der wässrigen Dispersion nach einem der Ansprüche 1 bis 7 zur Verklebung von Holz, Papier, thermoplastischen Kunststoffen, elastomeren Kunststoffen, thermoplastisch-elastomeren Kunststoffen, Vulkanisaten, textilen Geweben, Gewirken, Geflechten, Leder, Metallen, Keramik, Asbestzement, Steinzeug, Beton, Schaumstoffen, jeweils miteinander und/oder an porige Substrate, bevorzugt mit einer Dichte von weniger als 1 kg/Liter, insbesondere zur Verklebung von Schaumstoffen in der Mattratzen-, Möbel- und/oder Polsterverklebung.

14. Verfahren zur Herstellung eines Verbundmaterials, **dadurch gekennzeichnet, dass** mindestens zwei Fügeteile des Verbundmaterials mit der wässrigen Dispersion nach einem der Ansprüche 1 bis 7 verklebt werden.

## Claims

1. Aqueous dispersion at least containing
a) at least one polychloroprene,
b) at least one component selected from the group consisting of fresh sol, a modified silica sol, and mixtures thereof,
c) at least one copolymer containing acrylic acid or an acrylic ester, and
d) optionally further additives,
wherein the aqueous dispersion has a pH of 9.7 to 10.8.

2. Dispersion according to Claim 1, **characterized in that** the at least one polychloroprene is present in particles having a mean particle size of 60 to 220 nm.

3. Dispersion according to Claim 1 or 2, **characterized in that** the fresh sol is used as an aqueous silica solution with a solids content of 1% to 10% by weight, preferably 2% to 8% by weight, particularly preferably 3.5% to 6.5% by weight.

4. Dispersion according to any of Claims 1 to 3, **characterized in that** the modified silica sol is an anionic, aluminate-modified silica sol.

5. Dispersion according to any of Claims 1 to 4, **characterized in that** the at least one copolymer containing acrylic acid or an acrylic ester is at least one styrene-acrylic ester copolymer.

6. Dispersion according to any of Claims 1 to 5, **characterized in that**
a) the at least one polychloroprene is present to an extent of 65% to 94% by weight, preferably 70% to 90% by weight,
b) the at least one component selected from the group consisting of fresh sol and at least one modified silica sol, the at least one fresh sol is present in an amount of 0.5% to 15% by weight, particularly preferably 3% to 12% by weight, and the at least one modified silica sol is present in an amount of 0.25% to 10% by weight, particularly preferably 1.5% to 10% by weight, and
c) at least one copolymer containing acrylic acid or an acrylic ester is present to an extent of 12% to 35% by weight, preferably 13% to 30% by weight, particularly preferably 14% to 28% by weight,
based in each case on the total weight of the non-volatile fractions of the dispersion, and the sum of the components present is 100% by weight in each case.

7. Dispersion according to any of Claims 1 to 6, **characterized in that** it has a viscosity of 500 to 7000 mPa·s, preferably 1500 to 6000 mPa·s, determined in each case according to DIN ISO 2555: 2018-09 using a Brookfield rotational viscometer.

8. Process for preparing the aqueous dispersion according to any of Claims 1 to 7, **characterized in that** at least one polychloroprene is provided as an aqueous dispersion, and is mixed with at least one component selected from the group consisting of fresh sol, a modified silica sol and mixtures thereof, at least one copolymer containing acrylic acid or an acrylic ester, and optionally at least one further additive, the aqueous dispersion having a pH of 9.7 to 10.8.

9. Adhesive composition at least containing the dispersion according to any of Claims 1 to 7.

10. Use of the dispersion according to any of Claims 1 to 7 for the production of adhesive compositions.

11. Use of the dispersion according to any of Claims 1 to 7 for the adhesive bonding of foam substrates by the spray coagulation process.

12. Adhesive composite containing at least one substrate and/or sheetlike structure adhesively bonded using an aqueous dispersion according to any of Claims 1 to 7.

13. Use of the aqueous dispersion according to any of Claims 1 to 7 for the adhesive bonding of wood, paper, thermoplastics, elastomeric plastics, thermoplastic-elastomeric plastics, vulcanizates, textile fabrics, knitted fabrics, braids, leather, metals, ceramics, asbestos cement, stoneware, concrete, foams, in each case to one another and/or to porous substrates, preferably with a density of less than 1 kg/litre, in particular for the adhesive bonding of foams in mattress, furniture and/or upholstery adhesive bonding.

14. Method for producing a composite material, **characterized in that** at least two adherends of the composite material are adhesively bonded using the aqueous dispersion according to any of Claims 1 to 7.

## Revendications

1. Dispersion aqueuse contenant au moins
a) au moins un polychloroprène,
b) au moins un composant choisi parmi le groupe constitué d'un sol frais, d'un sol de silice modifié et de mélanges de ceux-ci,
c) au moins un copolymère contenant de l'acide acrylique ou un ester d'acide acrylique, et
d) le cas échéant d'autres additifs,
la dispersion aqueuse présentant un pH de 9,7 à 10,8.

2. Dispersion selon la revendication 1, **caractérisée en ce que** l'au moins un polychloroprène est présent dans des particules ayant une taille de particule moyenne de 60 à 220 nm.

3. Dispersion selon la revendication 1 ou 2, **caractérisée en ce que** le sol frais est utilisé sous forme de solution aqueuse d'acide silicique ayant une teneur en matières solides de 1 à 10 % en poids, de préférence de 2 à 8 % en poids, de manière particulièrement préférée de 3,5 à 6,5 % en poids.

4. Dispersion selon l'une quelconque des revendications 1 à 3, **caractérisée en ce que** le sol de silice modifié est un sol de silice anionique modifié à l'aluminate.

5. Dispersion selon l'une quelconque des revendications 1 à 4, **caractérisée en ce que** le copolymère contenant au moins un acide acrylique ou un ester d'acide acrylique est au moins un copolymère de styrène-ester d'acide acrylique.

6. Dispersion selon l'une quelconque des revendications 1 à 5, **caractérisée en ce que**
a) l'au moins un polychloroprène est présent à raison de 65 à 94 % en poids, de préférence de 70 à 90 % en poids,
b) l'au moins un composant choisi parmi le groupe constitué d'un sol frais et d'au moins un sol de silice modifié, l'au moins un sol frais est présent en une quantité de 0,5 à 15 % en poids, de manière particulièrement préférée de 3 à 12 % en poids, et l'au moins un sol de silice modifié en une quantité de 0,25 à 10 % en poids, de manière particulièrement préférée de 1,5 à 10 % en poids, et
c) au moins un copolymère contenant de l'acide acrylique ou un ester d'acide acrylique est présent à raison de 12 à 35 % en poids, de préférence de 13 à 30 % en poids, de manière particulièrement préférée de 14 à 28 % en poids,
à chaque fois par rapport au poids total des proportions non volatiles de la dispersion et la somme des composants présents vaut à chaque fois 100 % en poids.

7. Dispersion selon l'une quelconque des revendications 1 à 6, **caractérisée en ce qu'**elle présente une viscosité de 500 à 7 000 mPa·s, de préférence de 1500 à 6 000 mPa·s, à chaque fois déterminée selon la norme DIN ISO 2555: 2018-09 au moyen d'un viscosimètre rotatif Brookfield.

8. Procédé de fabrication de la dispersion aqueuse selon l'une quelconque des revendications 1 à 7, **caractérisé en ce qu'**au moins un polychloroprène est présenté sous forme de dispersion aqueuse et mélangé avec au moins un composant choisi parmi le groupe constitué par un sol frais, un sol de silice modifié et des mélanges de ceux-ci, au moins un copolymère contenant de l'acide acrylique ou un ester d'acide acrylique, et éventuellement au moins un autre additif, la dispersion aqueuse présentant un pH de 9,7 à 10,8.

9. Composition adhésive, contenant au moins la dispersion selon l'une quelconque des revendications 1 à 7.

10. Utilisation de la dispersion selon l'une quelconque des revendications 1 à 7 pour la fabrication de compositions adhésives.

11. Utilisation de la dispersion selon l'une quelconque des revendications 1 à 7 pour le collage de substrats en mousse par le procédé de coagulation par pulvérisation.

12. Composite adhésif, contenant au moins un substrat et/ou une structure plane collé(e) avec une dispersion aqueuse selon l'une quelconque des revendications 1 à 7.

13. Utilisation de la dispersion aqueuse selon l'une quelconque des revendications 1 à 7 pour le collage de bois, papier, matériaux synthétiques thermoplastiques, matériaux synthétiques élastomères, matériaux synthétiques thermoplastiques-élastomères, produits vulcanisés, tissus textiles, tricots, treillis, cuir, métaux, céramique, fibrociment, grès, béton, mousses, à chaque fois les uns avec les autres et/ou sur des substrats poreux, de préférence d'une masse volumique inférieure à 1 kg/litre, en particulier pour le collage de mousses dans le collage de matelas, de meubles et/ou de rembourrages.

14. Procédé de fabrication d'un matériau composite, **caractérisé en ce qu'**au moins deux pièces d'assemblage du matériau composite sont collées avec la dispersion aqueuse selon l'une quelconque des revendications 1 à 7.
